# EUROPEAN PATENT APPLICATION

(11) **EP 4 826 204 A1**
(43) Date of publication of application: **21.10.2026**
(21) Application number: 26169909.4
(22) Date of filing: 31.03.2026
(51) Int. Cl.: E06B 3/673, E06B 3/663

(54) **APPARATUS AND METHOD FOR HEATING A SPACER FOR PRODUCING INSULATING GLASS, AND APPARATUS AND METHOD FOR PRODUCING INSULATING GLASS**

(30) Priority: 18.04.2025 IT 202500008901
(71) Applicant: Forel S.P.A. Unipersonale, 31056 Roncade, Treviso (IT)
(72) Inventor: VIANELLO, Fortunato, 31056 Roncade, Treviso (IT); VIANELLO, Riccardo, 31056 Roncade, Treviso (IT)
(74) Representative: Busana, Omar

(57) **Abstract**

An apparatus (12) for heating a spacer (2) applied to a glass plate (1), comprises: support means (14) adapted to support the glass plate (1) on a resting plane (P) during heating, at an operating area (16) defined by an axis (x) and by an axis (y) perpendicular to each other, having an operating perimeter (162). The apparatus (12) further comprises heating means (18) comprising a plurality of heating elements (20, 22, 24, 26) adapted to heat the spacer (2) applied to at least one glass plate (1). At least one of the heating elements (20, 22, 24, 26) is adapted to be moved with respect to the plane (P).

## Description

### FIELD OF APPLICATION

The present invention relates to an apparatus and method for heating a spacer for producing insulating glass, and an apparatus and method for producing insulating glass.

### BACKGROUND ART

As is known, in the field of apparatuses for producing insulating glass, there has been a growing demand by the market (with consequent significant attention by the manufacturers) on increasing, as much as possible, the productivity of the machines and the cost-effectiveness of the product produced.

One of the key elements in the production of insulating glass, is undoubtedly the spacer, which is interposed between the glass plates.

In fact, the spacer must be capable of sufficiently performing all the functions necessary for the operation of the insulating glass, such as:
- keeping a determined distance between the glass plates;
- barrier to the inlet of steam and to the outlet of gas;
- structural strength; and
- thermal insulation.

For example, patent US6581341B1 describes a type of spacer which, by virtue of the particular structure described, is used without resorting to secondary sealing, with a consequent financial benefit to the finished product.

However, the increased simplicity of the product is associated with increased criticality elements in the process.

For example, the spacer must be suitably "activated" in the application process by means of heating, so as to ensure correct adhesion onto the glass. In other words, the spacer must be heated so that the adhesive used for the spacer to adhere to the glass plates, can be in the required gluing condition.

Such a process must be carried out with particular precision because, if the spacer is heated too little, the material would be insufficiently fluid, while if it is heated too much, it would not be possible to apply the necessary pressure between the glass and the material.

In both cases, the adhesion of the spacer to the glass would not be feasible, or in any case it would be ineffective.

Therefore, there is the need for machines and processes to make the application of the spacer adequately efficient so as to ensure the accurate adhesion of the spacer to the glass plate, as well as consequent maximum production quality.

In this regard, the prior art has suggested a few technical solutions which, however, are not without drawbacks, as will be discussed below.

For example, US10704319B2 comprises the sequential application of heat to the sides of the spacer before applying the coupling pressure between the two glass plates. In essence, the spacer is heated a little at a time, until the entire perimeter, around which the spacer is distributed, is covered.

The sequentiality of the heating does not allow ensuring that the spacer is at the same temperature all along the perimeter. Indeed, it is evident that the spacer section, which is first subjected to heating, will be at a different temperature to the last spacer section subjected to heating.

Furthermore, the result obtainable may depend on the size of the glass plates (larger glass may have greater differences in temperature).

Another example is found in patent CN219907406U. In this case, it is not an apparatus for heating a spacer, but an apparatus for heating the edges of a glass plate. In any case, the heating occurs simultaneously on all the edges of the glass plate, by virtue of a particular staggered arrangement of the heating lamps.

However, the solution is not adapted to the heating of the spacers. Indeed, heat is supplied to a front face or a rear face of the glass plate, whereby, if the glass plate were provided with a spacer, only the corresponding upper or rear face thereof would be heated, leaving the face opposite to the lamp cold.

Again, patent US10717668B2 comprises the simultaneous application of heat along the edges of the glass plate by means of a matrix of lamps switched on according to a suitable sequence during the translation of the glass. However, such a solution, adapted for use in furnaces for the vacuum glass sector with horizontally arranged glass, involves considerable construction complexity.

Furthermore, an apparatus is described in CN222434351U, in which the heating means move along directions parallel to the planes of the glass plates. The object of such movement is to adapt the heatable perimeter by the heating means to different sizes of glass plates.

However, the described machine is not adapted to homogeneously heat the spacer, with reference to the thickness thereof, since the lamps are arranged with a fixed frontal direction, thus, adapted to exclusively heat the face of the spacer on the side opposite to the glass.

Therefore, the background art described is inadequate for heating the spacer both homogeneously and simultaneously with reference to the thickness thereof, and with reference to the length thereof.

### PRESENTATION OF THE INVENTION

Therefore, the need is felt to at least partially solve the drawbacks and limitations stated with reference to the prior art.

Therefore, the need is felt to provide an apparatus and method for heating a spacer for producing insulating glass, which allows effective heating the spacer so as to ensure correct adhesion to the glass plates.

Furthermore, the need is felt for an apparatus and method for heating a spacer, which allows obtaining a uniform temperature of the spacer, both with reference to the thickness thereof, and with reference to the length thereof.

Again, the need is felt for an apparatus and method for heating a spacer, which may be easily integrated into an apparatus for producing insulating glass.

Such needs are at least partially met with an apparatus for heating a spacer according to claim 1, an insulating glass production line according to claim 24, a method for heating a spacer according to claim 25, and method for producing insulating glass according to claim 32.

### DESCRIPTION OF THE DRAWINGS

Further features and advantages of the present invention will be more readily understood from the description set out below of preferred, non-limiting embodiment examples, in which:
- figure 1 diagrammatically shows a front view of an apparatus for heating a spacer according to a possible embodiment, in a possible operating step;
- figure 2 shows a diagrammatic form of a front view of the same apparatus in figure 1 in a subsequent operating step;
- figure 3 shows a diagrammatic form of a sectional side view of the apparatus in figure 1, according to the section plane B-B shown in figure 1;
- figure 4 diagrammatically shows a sectional side view of the apparatus of figure 2, according to the section plane C-C shown in figure 2;
- figure 5 shows a diagrammatic form of an enlargement of the detail indicated with A in figure 4;
- figure 6 shows a diagrammatic form of an axonometric view of an apparatus for heating a spacer according to a possible embodiment;
- figure 7 shows a diagrammatic form of a front view of a line for producing insulating glass according to a possible embodiment;
- figure 8 diagrammatically illustrates a front view of a glass plate to which a spacer has been applied;
- figure 9 diagrammatically shows a front view of an apparatus for heating a spacer according to a possible alternative embodiment; and
- figure 10 diagrammatically shows a sectional side view of the apparatus in figure 9, according to the section plane D-D in figure 9.

The elements or parts of elements in common between the embodiments described below will be indicated with the same reference numerals.

### DETAILED DESCRIPTION

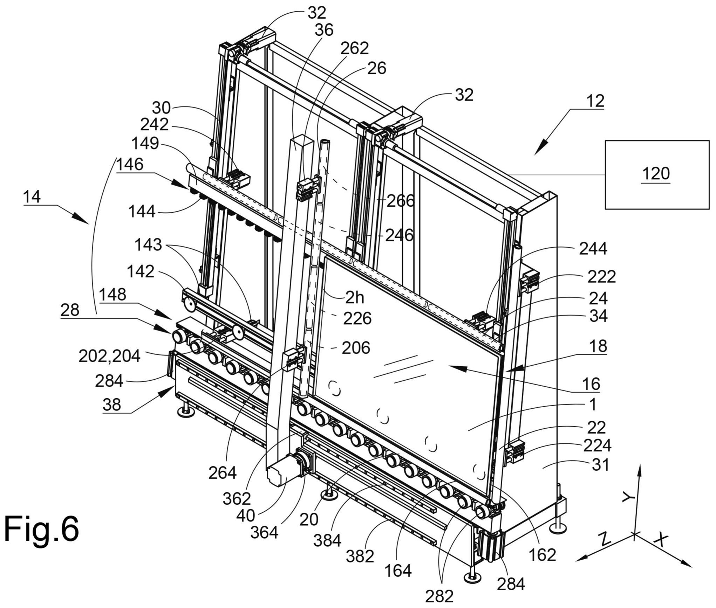

Figure 6, with reference numeral 12, shows an apparatus for heating a spacer 2 applied to a glass plate 1.

The apparatus 12 comprises support means 14 adapted to support the glass plate 1 during the heating on a support plane P defined by an x axis and a y axis perpendicular to each other, at an operating area 16 having an operating perimeter 162.

A z axis is also defined perpendicular to the plane P.

Furthermore, the apparatus 12 comprises heating means 18 provided with a plurality of heating elements 20, 22, 24, 26 adapted to heat the spacer 2 applied to at least one glass plate 1. At least one of the heating elements 20, 22, 24, 26 is adapted to be moved with respect to the plane P.

In particular, the vector decomposition of the movement of the at least one of the heating elements 20,22,24,26 may comprise a non-zero translational component along the z axis or a rotation.

According to a possible embodiment, at least one of the heating elements 20, 22, 24, 26 is adapted to be moved with respect to plane P, between at least one operating position, in which it is adapted to heat the spacer 2 and at least one rest position.

According to a possible embodiment, the y axis may have an inclination with respect to a vertical axis (plumb line direction) which may be selected between 0 and 90°.

The inclination may preferably be selected between 2° and 10° (this condition will be indicated below with the expression "vertical machine"). In the described embodiments, reference will be made to this type of machine, it being understood that such reference is not intended to be limiting, but purely descriptive.

According to possible alternative embodiments, the inclination may be about 90° (hereinafter this condition will be indicated by the expression "horizontal machine") .

According to a possible embodiment, the plurality of heating elements 20, 22, 24, 26, in an operative position, is adapted to substantially simultaneously heat the spacer 2.

Thus, it is apparent that the simultaneous heating of all the segments 2e, 2f, 2g, 2h forming the spacer allows obtaining a spacer, which, as a whole, is characterised by a particularly uniform temperature.

The at least one of the heating elements 20, 22, 24, 26 adapted to be moved with respect to plane P may be adapted to rotate about an axis. Advantageously, the rotation axis may be an axis substantially parallel to plane P, and preferably parallel to the operating perimeter 162.

The rotation may allow varying the orientation of the heating element so as to optimize the energy delivered on the spacer and/or so as to optimize the temperature gradient generated in the section.

According to a possible embodiment, the at least one of the heating elements 20, 22, 24, 26 to be moved between the operating position and the rest position is adapted to be rotated about an axis.

According to a possible embodiment, the at least one of the heating elements 20, 22, 24, 26, may be adapted to be moved along the z axis perpendicular to the support plane P.

Advantageously, said movement may be used to move said at least one heating element 20, 22, 24, 26 between at least one operating position and at least one rest position
In the preceding paragraphs, and in the following ones, in which reference was, and will be made to the movement between the operating position and the rest position, the same capability of reverse movement between the rest position and the operating position is implied.

According to an aspect of the present apparatus, the at least one heating element 20,22,24,26 may be adapted to be moved between one or more operating positions, in which it is close to the operating perimeter 162, and therefore adapted to heat a segment 2e, 2f, 2g, 2h of the spacer 2, and one or more rest positions, this term being understood to mean the positions, which are suitably spaced apart with respect to the operating perimeter 162 and such as not to interfere with the movement along the x direction of the glass.

Advantageously, the plurality of operating positions may be selected as a function of the features of the spacer, e.g., as a function of the height h thereof or the thickness thereof, or again, the chemical composition.

In other words, the position of the at least one heating element 20,22,24,26 may be adapted so that the thickness of the spacer 2 may be uniformly heated.

Advantageously, said operating and rest positions may be aligned along the z axis.

The at least one heating element 20, 22, 24, 26 may be adapted to be moved manually or automatically with respect to the plane P.

In particular, the at least one heating element 20, 22, 24, 26 may be adapted to be moved manually with respect to the plane P between at least one operating position, in which it is adapted to heat the spacer 2 and at least one rest position.

According to a possible alternative embodiment, the at least one heating element 20, 22, 24, 26 may be adapted to be moved automatically with respect to the plane P, between at least one operating position, in which it is adapted to heat the spacer 2 and at least one rest position.

In other words, the movement may be performed automatically, by virtue of adapted actuators, in turn controlled by a software program, or they may be performed manually by the user, e.g., by operating a mechanical locking along guides or sleeves (e.g., for making adjustments).

In fact, the adjustment of the position of the at least one heating element 20, 22, 24, 26 may be performed manually or automatically.

According to a possible embodiment, all the heating elements 20, 22, 24, 26 are adapted to be moved with respect to the plane (P). In particular, according to a possible embodiment, all the heating elements 20, 22, 24, 26 are adapted to be moved with respect to the plane (P) between at least an operating position, in which they are adapted to heat the spacer 2 and at least a rest position.

As will be apparent to a person skilled in the art, there is a correlation between the operating area 16 and the size of the glass plates 1 with the spacer 2 to be subjected to heating. Such correlation will be described hereinafter with reference to specific embodiments.

According to a possible embodiment, the rest position may be in a rear position with respect to the operating area 16.

In this description the expression "front with respect to the operating area 16", means the part of space, which is arranged, in use, on the side of the glass plate 1 affected by the spacer 2. Conversely, the expression "rear with respect to the operating area 16" means the part of space, which is arranged, in use, on the side of the glass plate 1 not affected by the spacer 2.

According to a possible embodiment, at least one of the heating elements 20, 22, 24, 26 may be adapted to be moved along the plane P.

The various components of the apparatus will now be presented in detail, with reference to particular reference embodiments. In any case, as will be apparent to a person skilled in the art, such reference is given purely for descriptive and non-limiting purposes.

The support means 14 may comprise means, which allow the rear face of the glass to rest along the plane P and support means, i.e., adapted to support the weight of the glass in the operating area 16.

As visible in the constructional example in figure 6, the support means may comprise a plurality of suction cups 142. Advantageously, each suction cup 142 may be provided with an actuator 143 to allow an independent movement thereof in the z direction between one suction cup and another, between a retracted rest position and an advanced gripping position at the plane P.

In a manner known per se, each suction cup 142 is in fluid connection with means for creating the vacuum, each, in turn, activatable separately with respect to the others.

Thereby, only the suction cups 142 entirely within the operating perimeter 162 of the glass plate 1 may be brought into the gripping position and activated, thus ensuring an effective retaining action of the glass plate and a suitable space near the edge 1h, allowing interference with the heating element 26 to be avoided.

Advantageously, the number, section and arrangement of the suction cups 142 are selected so as to ensure the support of the weight thereof for any size of glass for which the apparatus 12 is designed.

In the embodiment shown in figure 6, the suction cups 142 shown are seven in number, in any case such indication is given purely for descriptive, and non-limiting purposes.

According to a possible embodiment, the plurality of suction cups 142 may be arranged close to a lower edge 164 of the operating area 16.

In a possible embodiment, shown for example in figure 6, the support means 14 may comprise resting means 144 for the glass plate 1 on the plane P, e.g., a plurality of idle-type wheels, of the type frequently used in the glass industry.

As visible, for example, in figure 6, the wheels 144 may be arranged on a first row 146 and on a second row 148. According to a possible embodiment, the second row 148 of wheels 144 may be fixed and arranged in a lower position, while the first row 146 of wheels 144 may be movable in the direction of the y axis, parallel to the second row 148. Thereby, the support of the glass plates 1 may be adapted to the actual size of the glass plates 1.

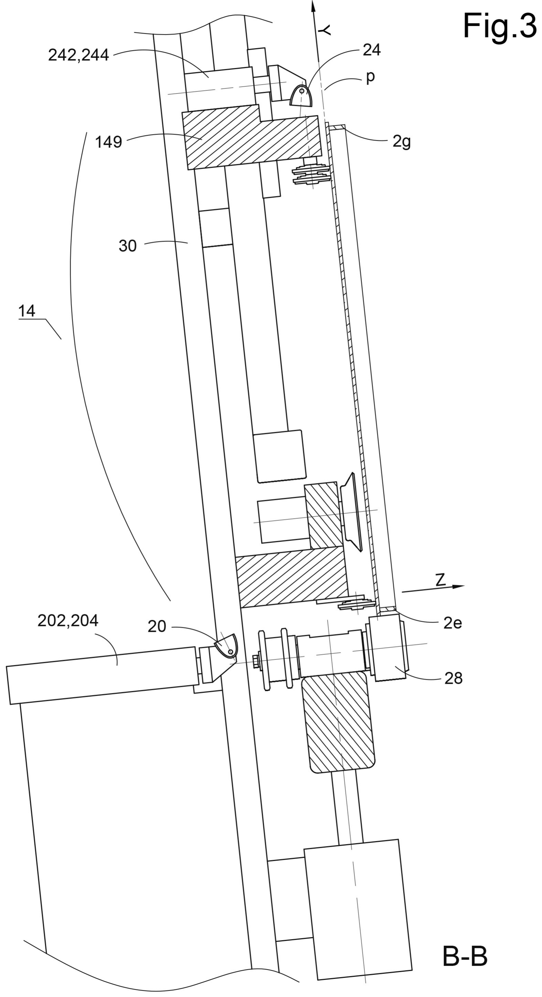

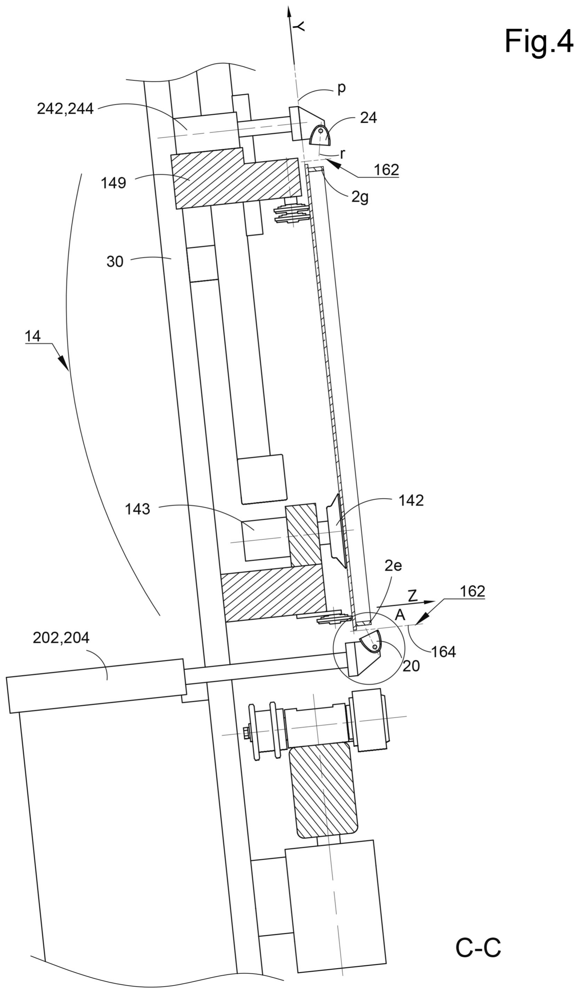

In this regard, the first row 146 of wheels 144 may be arranged on a wheeled beam 149 adapted to be moved along a rear frame 30, by virtue of actuation means 32. As visible, for example, in figures 3-4, and 6, the apparatus 12 comprises a rear frame 30 and a base 31.

As shown in the embodiment illustrated in figure 6, the actuation means 32 may be two in number and arranged at the top of the rear frame 30, and they may be of the electric type, each intended for the movement of a respective portion of the wheeled beam 149.

According to a possible constructional variant, the support means 14 may comprise, alternatively or additionally, different types of resting means for the glass 1 along the plane P, e.g., air cushions, in a manner known per se to a person skilled in the art.

According to a possible embodiment, the apparatus 12 may comprise towing means 28 adapted to move a plate of glass 1 along the x axis, so as to bring said plate to the operating area 16 and outside thereof.

For example, the towing means may be a plurality of rollers 282, motorized or partially motorized, adapted to transport the glass plates. An embodiment of this type is shown, for example, in figure 6. In a manner known per se, the towing means 28 may also be made in another way, e.g., by means of a conveyor belt (solution not shown in the accompanying figures).

The towing means 28 may be arranged at a lower edge 162 of the operating area 16.

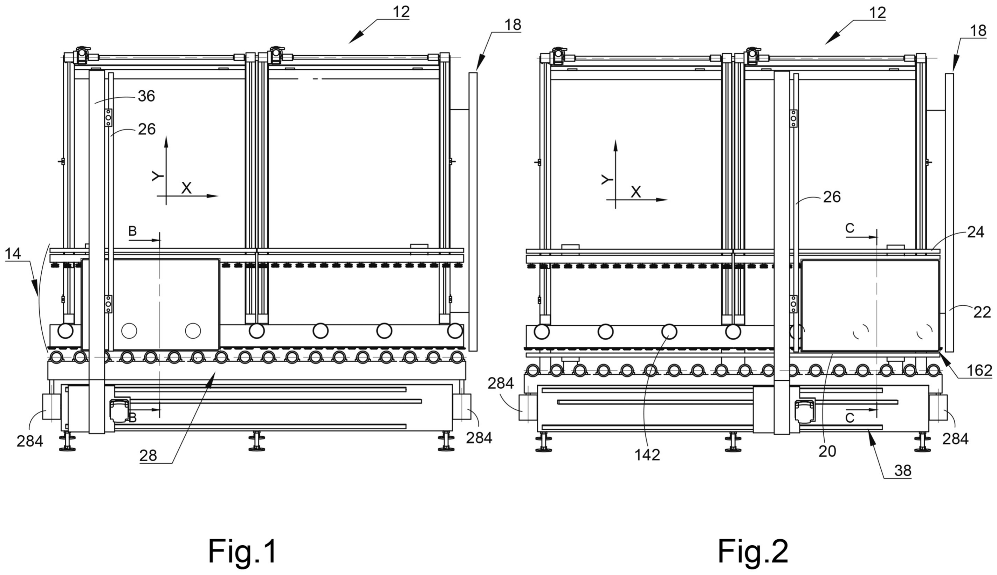

According to a possible embodiment, the towing means 28 may be arranged at a lower edge 162 of the operating area 16 and movable between a towing position, in which they are adapted to move a glass plate and a heating position spaced apart from the operating area 16. As shown in figures 1 and 2, actuators for the towing means 284 may be provided for positioning in the two operating positions.

From a procedural standpoint, before moving the towing means 28 into the heating position, it is necessary to activate the support means 142 to support the glass plate 1.

According to a possible embodiment, the plurality of heating elements 20, 22, 24, 26 may comprise four heating elements 20, 22, 24, 26, which form, in an operating position, a rectangle wherein a first heating element 20 and a third heating element 24 are arranged in a direction substantially parallel to the x axis, and a second heating element 22 and a fourth heating element 26 arranged in a direction substantially parallel to the y axis.

According to a possible embodiment, said heating elements 20, 22, 24, 26 may be of the directional heating type, according to an irradiation direction r.

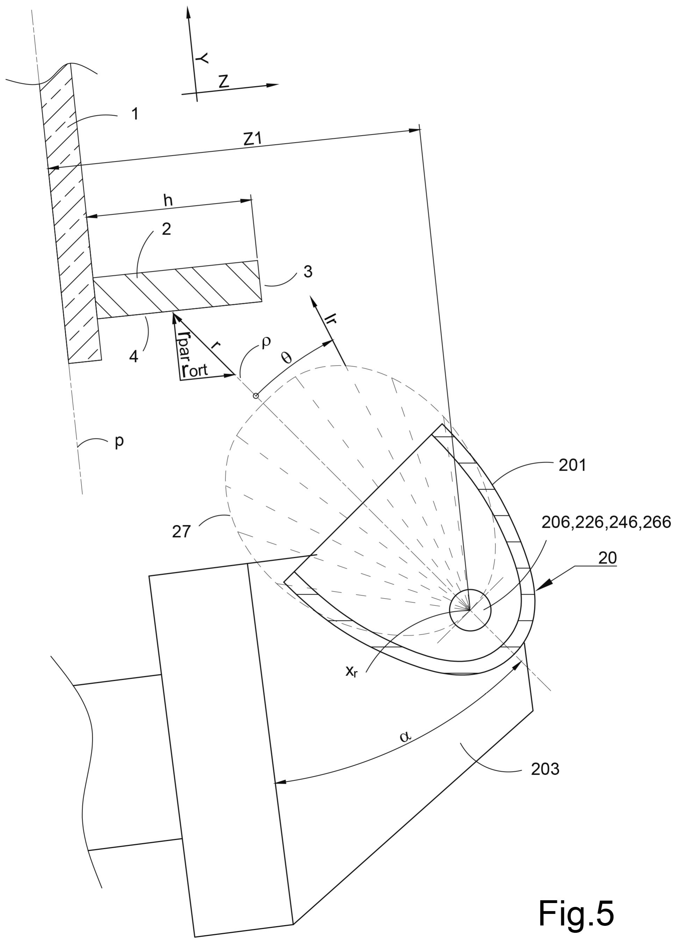

Directional heating may be implemented, for example, with flow directors 201, adapted to divert or reflect part of the radiant energy of the heating body and to direct it towards the spacer 2, as exemplified in fig. 5.

Advantageously, the heating elements 20, 22, 24, 26 may be infrared lamps, wherein the director consists of a parabola 201.

Alternatively, the director may be incorporated into the lamp, e.g., coating part of the outer surface thereof on the side opposite to the direction of the flow with reflective materials.

The heat flow emitted by the heating element may be characterized by radiometric measurements.

Thus, with reference to figure 5, it is possible to determine the distribution 27 of the radiant intensity Ir(θ), i.e., the function, which represents the radiant power emitted per unit of plane angle as a function of the direction θ (for convenience, the origin of the radiant flow is assumed to coincide with a longitudinal axis xr of the heating body 206, 226, 246, 266).

If said distribution 27 were symmetrical to a plane ρ, it is possible to define an irradiation direction r of the heating element, coplanar both to ρ and xr and orthogonal to the latter.

In this case, at least one of the heating elements 20, 22, 24 and 26 may be arranged on supports 203, comprising means for modifying the inclination of said heating elements 20,22,24,26, namely the angle α with respect to the spacer 2.

According to a possible embodiment, the adjustment of the angle α may be performed manually.

Thus, in use, the angle α does not vary with the varying features of the spacer.

The adjustment may be associated with an actuator, which allows the angle α to be varied as a function of the features of the spacer, e.g., as a function of the height h of the spacer.

The variation of the angle α allows directing the heat flow both onto the upper side 3 of the spacer 2 and onto the side 4, thus ensuring a more uniform heating with respect to what is provided by the prior art.

According to a possible embodiment, the plurality of heating elements 20, 22, 24, 26 may be configured so that at least two of said elements have inclinations, which are different from each other with respect to the spacer 2. As described previously, the heating elements may be arranged on supports 203, which comprise means for modifying the inclination, that is, the angle α with respect to the spacer 2. In this specific variant, the angle α set for the first heating element 20 may be different from the angle set for the second heating element 22, for the third heating element 24 or for the fourth heating element 26. For example, the heating elements 22, 26 arranged in a direction substantially parallel to the y axis may exhibit a different angular inclination to the heating elements 20, 24 arranged in a direction substantially parallel to the x axis.

The main advantage of this possibility of configuring the inclinations consists of the possibility of adapting to specific geometric tolerances of the glass plate 1, to the relative position between the glass plate 1 and the spacer 2 and to the sizes of the spacer 2. By adjusting different inclinations for the individual sides, it is ensured that the heat flow directed onto the upper side 3 of the spacer 2 and onto the side 4 determines an extremely homogenous heating over the entire perimetric extension.

The irradiation direction r may therefore have a parallel component rₚₐᵣ to the operating area 16, at said spacer 2, and/or a component perpendicular rₒᵣₜ to the operating area 16, at said spacer 2.

Therefore, according to a possible embodiment, the irradiation direction of the first heating element 20 may have a component in the direction of the y axis, the irradiation direction of the second heating element 22 may have a component in the direction of the x axis, the irradiation direction of the third heating element 24 may have a component in the direction of the Y axis (in a direction opposite to that of the first heating element 20), the irradiation direction of the fourth heating element 26 may have a component in the direction of the x axis (in a direction opposite to that of the second heating element 22).

As mentioned above, to avoid interference with the first heating element, the towing means 28 may be moved, as shown in figures 3 (rest position) and 4 (heating position).

According to a further possible embodiment, the first heating element 20, typically arranged at a lower edge of the operating area 16, may be arranged directly on a support of the towing means 28. In this configuration, the first heating element 20 is mechanically integral with the same towing means 28. Consequently, when the towing means 28 are moved between the towing position and the heating position spaced apart with respect to the operating area 16, the first heating element 20 is translated together therewith using the same actuator 284. Furthermore, guides may be interposed between the first heating element 20 and the towing means 28, so as to allow the heater 20 to be translated with respect to the towing means 28. Thus, it is possible to correctly position the heater 20 with respect to the spacer 2 in the heating step.

Advantageously, this specific configuration allows a significant simplification of the structure of the apparatus 12, reducing the number of independent actuators required for the movement.

Advantageously, the fourth heating element 26 may be provided with movement along the x axis to adapt to the length in the x direction of the glass.

For example, figure 2 shows the heating element 26 in an operating position different to a first rest position illustrated in figure 1.

According to a possible alternative embodiment, the fourth heating element 26 may be moved in a z direction substantially perpendicular to the operating area 16, preferably with the rest position at the front with respect to the operating area 16.

According to a possible embodiment, the heating elements 20, 22, 24, 26 may be movable along the z direction, and may be mounted on actuators 202, 204, 222, 224; 242, 244; 262, 264, preferably of the electrical type, for movement between at least one operating position and at least one rest position. According to possible alternative embodiments, the heating elements 20, 22, 24, 26 may be arranged on actuators of a different type, e.g., of a pneumatic type.

The actuators 202, 204, 222, 224; 242, 244; 262, 264 may be adapted to move said heating elements from a rear position to said operating area 16 to a lateral position with respect to the operating area 16. In a possible alternative embodiment, the actuators 202, 204, 222, 224; 242, 244; 262, 264 may be adapted for moving the heating elements from a front position to the operating area 16 to a lateral position with respect to the operating area 16. In a further alternative embodiment, some of the actuators 202, 204, 222, 224; 242, 244; 262, 264 may be adapted to move said heating elements from a front position to said operating area 16 to a lateral position with respect to the operating area 16, and some of the actuators 202, 204, 222, 224; 242, 244; 262, 264 may be adapted to move said heating elements from a rear position to said operating area 16 to a lateral position with respect to the operating area 16, depending on specific requirements.

As seen in the accompanying figures, the fourth heating element 26 may be arranged in input to the apparatus 12, the second heating element 22 may be arranged in output from the apparatus 12, the first heating element 20 may be arranged at a lower edge of the operating area 16, and the third heating element 24 may be arranged at an upper edge of the operating area 16.

According to a possible embodiment, the heating elements 20, 22, 24, 26 may each comprise a plurality of heating bodies 206, 226, 246, 266 arranged along a linear sequence. Advantageously, the heating bodies 206, 226, 246, 266 may be selectively activatable according to the dimensions of the spacer 2 to be heated.

For example, in the case of the glass 1 shown in figure 6, conveniently, only elements 206, 226, and 246 of the heating element 26 will be activated, while element 266 may be kept deactivated during the heating of the spacer 2, since the corresponding radiant flow would be set outside the segment 2h.

According to a possible embodiment, the third heating element 24 may be movable according to the direction of the y axis. The third heating element 24 may be arranged on a transverse beam 34, movable along the rear frame 30.

Advantageously, the roller beam 149 and the transverse beam 34 may be integral with each other. In other words, the movement of a row of rollers may be associated with the movement of the third heating element 24. In fact, the actual dimensions of the plate 1 provided with the spacer 2 to be subjected to heating, defines the position of the row of rollers and the heating element.

In alternative embodiments, the movement of the transverse beam 34, on which the third heating element 24 is arranged, may be independent, and provided with actuation means thereof.

Similarly, the fourth heating element 26 may be movable along the direction of the X axis. Thereby, the position of the fourth heating element 26 may be adapted to the corresponding size of the glass plate 1 provided with the spacer 2 to be subjected to heating.

In this regard, the fourth heating element 26 may be arranged on a vertical beam 36, which is movable along the direction of the x axis. According to a possible embodiment, seen, for example, in figures 1, and 2 and 6, the vertical beam 36 may move on rail means 38 arranged at the base 31 of the apparatus 12.

In the embodiments shown in the accompanying figures, the rail means 38 comprise a first rail 382 and a second rail 384 parallel to each other, and said vertical beam 36 is provided with respective runners 362,364 (shown in figure 6).

According to a possible embodiment, the vertical beam 36 may be provided with actuation means 40 for moving said vertical beam 36 in the direction of the x axis.

The apparatus 12 may be operatively connected to a processing unit 120 operatively connected to the heating elements 20, 22, 24, 26 for the movement thereof and the activation / deactivation thereof. Advantageously, the management programs and operating parameters may be stored in the processing unit.

By way of example, the parameters may comprise the relative positions (including, possibly, the angular inclinations) at which the heating elements must be positioned with respect to the spacer segments, and the times required for heating as a function of the features of the spacer.

These operating parameters may be set by the user in a preliminary adjustment step, based on the results of practical tests performed on sample glass plates, thus giving rise to combinations of parameters associated with a specific spacer shape.

These combinations ("recipes", in standard jargon) may further be recalled automatically as a function of the production program and specific shape of the glass to be processed.

During the production step, the processing unit 120 may be adapted to receive the production program (which can comprise, for example, the size of the glass in input) and manage the machine actuators, including the positioning of the heating elements according to the previously calibrated "recipes".

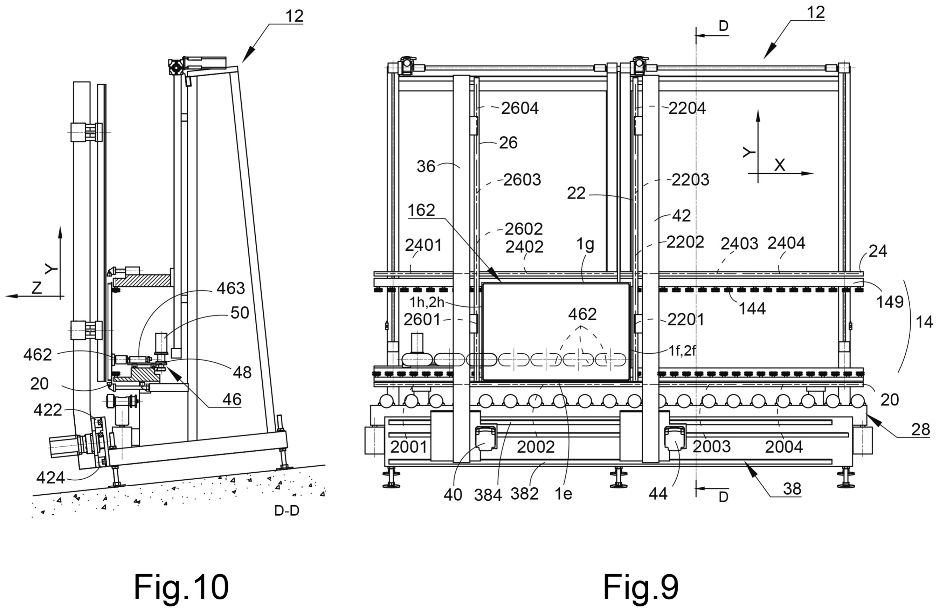

Figures 9 and 10 illustrate an alternative embodiment of the apparatus 12.

The apparatus 12 is substantially the same as the preceding embodiment, in which the second heating element 22 is also arranged on a second vertical beam 42 and movable in the direction of the x axis. According to a possible embodiment, shown, for example, in figures 9 and 10, the second vertical beam 42 may move on rail means 38 arranged at the base 31 of the apparatus 12.

In the embodiments shown in the accompanying figures, the rail means 38 comprise a first rail 382 and a second rail 384 parallel to each other, and said second vertical beam 42 is provided with corresponding runners 422,424 (indicated in figure 10).

According to a possible embodiment, the vertical beam 42 may be provided with actuation means 44 for moving the second vertical beam 42 in the direction of the x axis.

As seen in figure 9, the rail means 38 may be shared by the vertical beam 36 and by the second vertical beam 42.

According to a possible embodiment, the support means 14 may comprise a suction-cup carriage 46 adapted to translate in the direction of the x axis, and, preferably, rollers 144.
The suction-cup carriage 46 may be provided with at least one suction cup 462 adapted to temporarily lock a glass plate 1 to the suction-cup carriage 46.

As shown in figure 10, the suction-cup carriage 46 may be arranged on guide means 48, and it may be movable by virtue of drive means 50 on board said suction-cup carriage 46.

Similarly to the previous description for the embodiment in figure 6, each suction cup 462 may be provided with an actuator 463 for movement in the z direction and a vacuum circuit for activation, which can be operated independently of one another.

The principal advantage of the embodiment in figures 9 and 10 consists of the possibility of heating the spacer 2 with the glass plate 1 moving instead of in stationary conditions, thus avoiding the deceleration and acceleration steps of the glass plate, with consequent improvements in the overall time needed for the process.

The operating perimeter 162, i.e., the zone affected by the heating, will therefore be movable rather than fixed.

The apparatus 12 takes a substantially symmetrical shape, therefore it is designed to operate with the movement of the glass from left to right, or vice versa.

Hereinafter, we will refer to the flow from the left, i.e., we will assume that an upstream station is located on the left and a downstream station is located on the right, looking at figure 9.

In an initial step, the roller beam 149 and the corresponding third heating element 24 may be positioned at the top edge of the glass 1g before the arrival of the glass plate from an upstream station.

At the same time, the suction-cup carriage 46 and the beams 36 and 42 may be positioned towards the left side of the apparatus 12. The glass 1 arrives from the upstream station, initially carried by the towing means 28.

Upon reaching the suction-cup carriage 46, the latter accelerates the motion thereof in the x direction until it reaches the same speed as the glass plate, to which it couples by means of an appropriate number of suction cups 462. At the same time, the beams 36 and 42 will also have started the movement thereof in the x direction to the right, until reaching the same speed as the glass, maintaining a constant distance with respect to the spacer segments 2h and 2f with which they are associated, respectively.

At this point, the towing means may be lowered and the heating element 20 may be positioned at the lower edge of the glass 1e.

The heating elements 20, 22, 24 and 26 are then moved from a rest position spaced apart with respect to the operating perimeter 162, to an operating position, in which they are positioned close to the operating perimeter 162. Once activated, the translation of the glass, accompanied by the synchronized movement of elements 26 and 22, will allow the spacer to be heated in a similar manner to that described with reference to the apparatus 12.

According to a variant of this operating mode, the heating bodies with which each heating element is made, may be switched on at different times as a function of the dimensions of the glass and the position taken during the translation.

For example, with reference to the specific dimensions of the glass shown in figure 9, it is advantageous to activate the heating bodies 2201 and 2202 of the heating element 22 and the heating bodies 2601 and 2602 of the heating element 26, and to keep the heating bodies 2203, 2204, 2603 and 2604 deactivated, since they are not affected by the corresponding segments along the sides 1f and 1h.

At the same time the heating bodies of the first and third heating elements 20 and 24 may be activated with a sequence such as to ensure that only the heating bodies, at least partially affected by the facing segments, are activated.

For example, in the instant shown in figure 9, only the heating bodies 2401, 2402, 2403, 2001, 2002, 2003 may remain activated.

During the progressive rightward displacement of the glass, the heating bodies, no longer corresponding to the respective spacer sections, will be suitably deactivated (first, 2401 and 2001, then, 2402 and 2002, and so on), while those, which are facing (e.g., the terminal heating bodies 2004 and 2404), will be activated.

A structural variant of the apparatus 13 (not shown) consists of making a beam selected from 36 and 42 integral with the suction-cup carriage 46, thus allowing the respective actuation means and runners to be eliminated, with clear construction simplifications.

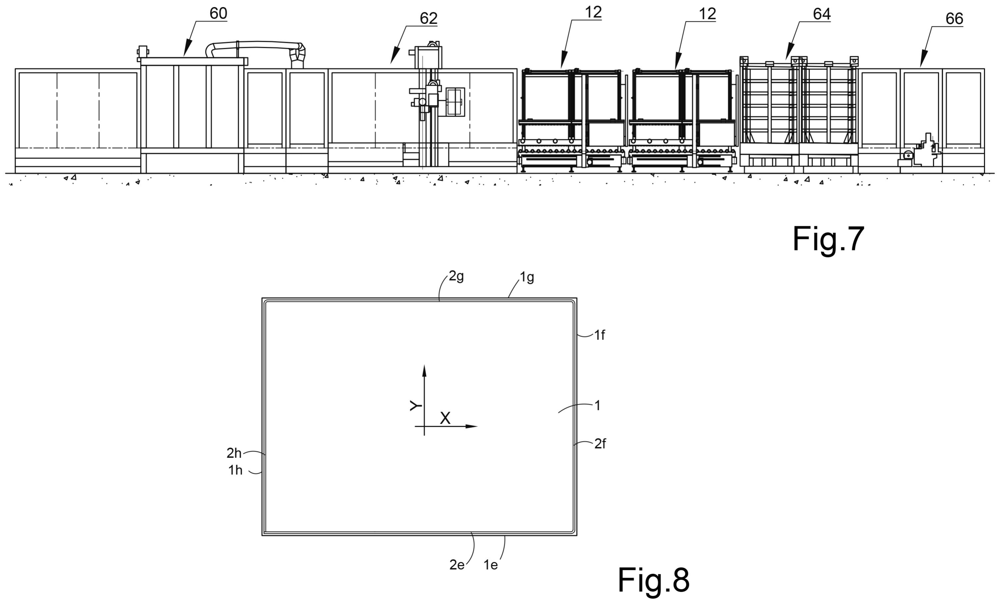

Figure 7 illustrates a line for producing insulating glass comprising at least one glass washing unit 60, at least one spacer application unit 62, at least one apparatus 12 for heating a spacer, at least one pressing unit 64, and at least one closing unit 66. The features of the units just listed are known per se to those skilled in the art. In particular, closing unit means the unit intended to close the discontinuity present between the end and the beginning of the spacer arranged on the glass plate.

The method for the heating of a spacer 2 for producing insulating glass essentially comprises the steps of:
a) providing apparatus 12 for heating a spacer 2 as described.
b) substantially simultaneously heating the segments 2e, 2f, 2g, 2h of the spacer 2.

The method comprises a step before step b) wherein at least one of the heating elements 20, 22, 24, 26 is moved with respect to the plane P. In particular, at least one of the heating elements 20, 22, 24, 26 may be moved with respect to the plane P between at least one rest position and at least one operating position, in which it is adapted to heat said spacer 2.

According to a possible embodiment, the method may comprise a step before step b) wherein at least one of the heating elements 20, 22, 24, 26 is moved between a rest position spaced apart from the operating perimeter 162, and an operating position, in which it is close to the operating perimeter 162, and therefore adapted to heat one segment 2e, 2f, 2g, 2h of the spacer 2.

According to a possible embodiment, the method may comprise a step before step b) wherein at least one of the heating elements 20, 22, 24, 26 is moved into an operating position as a function of the features of the spacer.

Advantageously, the heating elements 20, 22, 24, 26 each comprise a plurality of heating bodies 206, 226, 246, 266, said heated bodies being activated according to the dimensions or position of the spacer 2 to be heated.

The method may comprise a step wherein the fourth heating element 26 is moved in the direction of the x axis, and/or the second heating element 22 is moved in the direction of the x axis, and/or the third heating element 24 is moved in the direction of the y axis.

According to a possible embodiment, the step b) of heating of the spacer may occur with the glass plate stationary or with the glass plate moving, as described above.

According to this second embodiment, the method may comprise a step of sequential switching on of the heating bodies 206, 226, 246, 266 of the respective first and third heating elements 20, 24 so as to keep switched on only the heating bodies at least partially at the spacer.

The method may comprise a step preceding step b) wherein the towing means 28 are moved between a towing position, in which they are adapted to move a glass plate, and a heating position spaced apart with respect to said operating area (16).

Upon completion of the heating step, once the heating elements have been moved with respect to the plane P, e.g., in the rest position, the method may comprise a step in which the towing means 28 are moved from the heating position to the towing position to move the plate towards the outlet of the apparatus 12.

Therefore, the method for producing insulating glass comprises the steps of:
a- washing at least one first and at least one second glass plate;
b- Translation of the at least one first glass plate to the at least one pressing unit 64
c- application of at least one spacer on at least said second glass plate;
d- heating of the at least one spacer of the at least one second plate according to the above description;
e- coupling and pressing of the at least one first glass plate to the at least one second plate; and
f- preferably a step of closing the at least one joining angle of the spacer.

As is well known to those skilled in the art, steps a,c,d,e,f may be repeated for a third and possibly a fourth glass so as to obtain insulating glass composed of several insulating chambers.

Furthermore, as is widely known, each "e" step of pressing may comprise a step of filling with a suitable insulating gas (e.g., Ar or Kr) so as to improve the thermal performance.

If the line is configured with several identical machines in sequence, the method may also comprise the simultaneous processing of several insulating glass plates.

For example, in the case of the line being configured with two apparatuses for heating the glass (12) and two pressing units (64), conveniently, step "a" would comprise the washing in sequence of two first glass plates and two second glass plates, step "b" the translation of the two first glass plates towards the presses 64, step "c" the application of the spacer on the two second glass plates, step "d" the simultaneous heating of the spacers applied on the two second glass plates, step "e" the simultaneous pressing of the first two glass plates with the second two glass plates. The redundancy of the apparatuses in a production line may therefore allow the productivity thereof to be increased, especially when such redundancy regards the slower processes.

Following this obvious technical principle, those skilled in the art may easily design alternative configurations to the one described by way of example, without particular inventive effort (e.g., it is possible to double or even triple the number of units for applying the spacer 62 or washing units 60, or again the number of closing units 66).

Thus, the advantages, which can be achieved with the present invention are apparent.

First, an apparatus is provided and method allowing the efficient heating of the spacer of an insulating glass plate, so as to ensure the correct adhesion thereof to the glass plates.

Furthermore, an apparatus has been provided and method for heating a spacer, which allows obtaining a uniform temperature thereof before coupling and pressing to a second glass plate.

Again, an apparatus has been provided and method for heating a spacer, which may be easily integrated into an apparatus and method for producing insulating glass.

For the embodiments described above, in order to meet specific requirements, those skilled in the art may make modifications and/or replacements of the elements described with equivalent elements, without thereby departing from the scope of the appended claims.

## Claims

1. Apparatus (12) for heating a spacer (2) applied to a glass plate (1), comprising:
support means (14) adapted to support the glass plate (1) during the heating on a resting plane (P) defined by an axis (x) and by an axis (y) perpendicular to each other, at an operating area (16), having an operating perimeter (162);
heating means (18) comprising a plurality of heating elements (20, 22, 24, 26) adapted to heat said spacer (2) applied to at least one glass plate (1);
wherein at least one of said heating elements (20, 22, 24, 26) is adapted to be moved with respect to the plane (P).

2. Apparatus (12) according to the preceding claim, **characterised in that** said at least one of said heating elements (20, 22, 24, 26) is adapted to be moved with respect to the plane (P) between at least one operating position in which it is adapted to heat said spacer (2) and at least one rest position.

3. Apparatus (12) according to any one of the preceding claims, **characterised in that** said plurality of heating elements (20, 22, 24, 26) in the operating position are adapted to substantially simultaneously heat said spacer (2).

4. Apparatus (12) according to any one of the preceding claims, **characterised in that** said at least one of said heating elements (20, 22, 24, 26) is adapted to be moved with respect to the plane (P), through a rotation around an axis.

5. Apparatus (12) according to any one of the preceding claims, **characterised in that** said at least one of said heating elements (20, 22, 24, 26) to be moved between said operating position and said rest position, is adapted to be moved along an axis (z) perpendicular to the resting plane (P).

6. Apparatus (12) according to any one of the preceding claims, **characterised in that** said at least one heating element (20, 22, 24, 26) is adapted to be moved manually with respect to the plane (P).

7. Apparatus (12) according to any one of the preceding claims, **characterised in that** said at least one heating element (20, 22, 24, 26) is adapted to be moved automatically with respect to the plane (P) between at least one operating position in which it is adapted to heat said spacer (2) and at least one rest position.

8. Apparatus (12) according to any one of the preceding claims, **characterised in that** at least one of said heating elements (20, 22, 24, 26) is adapted to be moved along the plane P.

9. Apparatus (12) according to any one of the preceding claims, **characterised in that** said support means (14) comprise a plurality of suction cups (142) operable independently of each other.

10. Apparatus (12) according to any one of the preceding claims, **characterised in that** said support means (14) are arranged on a carriage (46) adapted to be moved in direction (x).

11. Apparatus (12) according to any one of the preceding claims, **characterised in that** it comprises towing means (28) at said operating area (16), said towing means (28) being adapted to move a glass plate (1) in direction (x) at said operating area (16), being arranged at a lower edge (162) of said operating area (16) and movable between a towing position, in which they are adapted to move a glass plate, and a heating position which is spaced with respect to said operating area (16).

12. Apparatus (12) according to any one of the preceding claims, **characterised in that** said plurality of heating elements (20, 22, 24, 26) comprise four heating elements (20, 22, 24, 26), said heating elements (20, 22, 24, 26) forming, in the operating position, a rectangle in which a first heating element (20) and a third heating element (24) are arranged according to a direction substantially parallel to said axis (x), and a second heating element (22) and a fourth heating element (26) are arranged according to a direction substantially parallel to said axis (y) .

13. Apparatus (12) according to the preceding claim, **characterised in that** said first heating element (20), said second heating element (22) and said third heating element (24) are adapted to be moved according to a direction (z) substantially perpendicular to said operating area (16), said rest position being behind said operating area (16).

14. Apparatus (12) according to the preceding claim, **characterised in that** said fourth heating element (26) is adapted to be moved according to a direction (z) substantially perpendicular to said operating area (16), said rest position being in front of said operating area (16) .

15. Apparatus (12) according to any one of the preceding claims, **characterised in that** said heating elements (20, 22, 24, 26) are arranged on actuators (202, 204, 222, 224; 242, 244; 262, 264), preferably of an electrical type, for movement between said at least one operating position and said at least one rest position.

16. Apparatus (12) according to any one of the preceding claims, **characterised in that** said axis (x) corresponds to the transit direction of the glass plates (1), said fourth heating element (26) being arranged in input to said apparatus (12), said second heating element being arranged in output from said apparatus (12), said first heating element being positioned at a lower edge of said operating area (16), said third heating element (24) being positioned at an upper edge of said operating area (16).

17. Apparatus (12) according to any one of the preceding claims, **characterised in that** said heating elements (20, 22, 24, 26) each comprise a plurality of heating bodies (206, 226, 246, 266).

18. Apparatus (12) according to the preceding claim, **characterised in that** said heating bodies (206, 226, 246, 266) are selectively activatable according to the dimensions of the spacer (3) to be heated.

19. Apparatus (12) according to any one of the preceding claims, **characterised in that** said heating elements (20, 22, 24, 26) are of the directional heating type, according to a irradiation direction (r).

20. Apparatus (12) according to the preceding claim, **characterised in that** the irradiation direction (r) can have a component parallel (rₚₐᵣ) to the resting plane (P).

21. Apparatus (12) according to any one of the preceding claims, **characterised in that** said at least one heating element (20, 22, 24, 26) is movable according to the direction of the axis (y).

22. Apparatus (12) according to any one of the preceding claims, **characterised in that** at least one heating element (20, 22, 24, 26) is movable according to the direction of the axis (x).

23. Apparatus (12) according to any one of the preceding claims, **characterised in that** it comprises a processing unit (120) operatively connected to said heating elements (20, 22, 24, 26) for their movement and their activation / deactivation.

24. Line for producing insulating glass comprising at least one glass washing unit (60), at least one spacer application unit (62), at least one apparatus (12) for heating a spacer according to any one of the preceding claims, at least one pressing unit (64), and at least one closing unit (66).

25. Method for heating a spacer (2) for producing insulating glass comprising the steps of:
a) providing an apparatus for heating said spacer (2) according to any one of claims 1-23;
b) substantially simultaneously heating said spacer (2);
**characterised in that** it comprises a step before step b) wherein at least one of said heating elements (20, 22, 24, 26) is moved with respect to the plane (P).

26. Method according to claim 25, **characterised in that** said step before step b) wherein at least one of said heating elements (20, 22, 24, 26) is moved with respect to the plane (P) occurs between at least one rest position and at least one operating position in which it is adapted to heat said spacer (2).

27. Method according to any one of claims 25-26, **characterised in that** said heating elements (20, 22, 24, 26) each comprise a plurality of heating bodies (206, 226, 246, 266), said heating bodies being activated according to the dimensions and position of the spacer (3) to be heated.

28. Method according to any one of claims 25-27, **characterised in that** it comprises a step in which the fourth heating element (26) is moved according to the direction of the axis (x), and/or the second heating element (22) is moved according to the direction of the axis (x), and/or the third heating element (24) is moved according to the direction of the axis (y).

29. Method according to any one of claims 25-28, **characterised in that** said step b) occurs with the glass plate stationary or with the glass plate moving.

30. Method according to any one of claims 25-29, **characterised in that** the operating position of said heating elements (20,22,24,26) and the ignition times are chosen as a function of the characteristics of the spacer (2).

31. Method according to any one of claims 25-30, **characterised in that** it comprises a step before step b) wherein the towing means (28) are moved between a towing position, in which they are adapted to move a glass plate, and a heating position which is spaced with respect to said operating area (16).

32. Method for producing insulating glass comprising the steps of:
a) washing at least a first and at least a second glass plate;
b) translating the at least a first glass plate to the at least one pressing unit 64
c) applying at least one spacer on at least one said second glass plate;
d) heating the at least one spacer of the at least a second plate according to any one of claims 25-31;
e) coupling and pressing the at least a first glass plate with the at least a second plate; and
f) preferably a closing step of the at least one joining angle of the spacer.

33. Method for producing insulating glass according to the preceding claim, wherein at least some of said steps are performed on several glass plates simultaneously.
